# EUROPEAN PATENT APPLICATION

(11) **EP 4 098 587 A1**
(43) Date of publication of application: **07.12.2022**
(21) Application number: 21177719.8
(22) Date of filing: 04.06.2021
(51) Int. Cl.: B65G 1/02, A47B 87/02, B65D 19/38

(54) **SUPPORT STRUCTURE**

(71) Applicant: Erfo B.V., 4836 LK Breda (NL); MaxxRack Nederland B.V., 4836 LK Breda (NL)
(72) Inventor: Lourier, Alfonsus Joannes Gerardus, 2970 's-Gravenwezel, Schilde, Belgi (NL)
(74) Representative: 't Jong, Bastiaan Jacob

(57) **Abstract**

The invention relates to a support structure, which comprises:
- a U-shaped base frame comprising two legs connected by a base part;
- a U-shaped top frame comprising two legs connected by a base part;
- at least two first uprights arranged between the free ends of the U-shaped base frame and the free ends of the U-shaped top frame,
- at least two second uprights arranged to the base part of the U-shaped base frame extending vertically to the base part of the U-shaped top frame,
wherein the distance between the legs of the U-shaped base frame increases with increasing distance to the base part of the U-shaped base frame,
wherein
the at least two second uprights are arranged at a distance of the corners that connect the legs to the base part of the U-shaped base frame and the distance between the at least two first uprights is larger than the maximal distance occupied by the at least two second uprights; and
- two protrusions, each arranged on a leg of the base frame, near and at a distance of the base part, and extending parallel to the length of the base part and outwardly relative to the U-shaped base frame.

## Description

The invention relates to a support structure, which comprises:
- a U-shaped base frame comprising two legs connected by a base part;
- a U-shaped top frame comprising two legs connected by a base part;
- at least two first uprights arranged between the free ends of the U-shaped base frame and the free ends of the U-shaped top frame,
- at least two second uprights arranged to the base part of the U-shaped base frame extending vertically to the base part of the U-shaped top frame,
wherein the distance between the legs of the U-shaped base frame increases with increasing distance to the base part of the U-shaped base frame,
wherein
the at least two second uprights are arranged at a distance of the corners that connect the legs to the base part of the U-shaped base frame and the distance between the at least two first uprights is larger than the maximal distance occupied by the at least two second uprights

Such a support structure is for example known from EP 2927147. This known support structure is used to stack cargo, such as big bags over each other. The support structure is positioned over a big bag and the top frame of the support structure allows a second big bag to be arranged over the first big bag. The support structures can be nested into each other for storage, but it is not possible with these support structures to stack two support structures on top of each other in order to provide additional levels.

GB 2187934 discloses a support structure, which can be stacked to provide more than two storage levels for cargo. The support structures are provided with a rail system with a first profile arranged on the top of the support structure and a second profile on the bottom of the support structure. These two profiles can be slid into each other and provide a coupling between two stacked support structures. However, positioning a second support structure over a first support structure such that the profiles can be slid into each other is difficult.

A disadvantage of these known support structures is that arranging the support structures orderly in a row of support structures is difficult. Each support structure needs to be positioned correctly in order to provide a neat row. Furthermore, there is no interaction between the support structures within a row, such that a single support structure is easily pushed out of the row. When a number of support structures are stacked on top of each other, there is no structural connection between support structures, which could reduce the risk that a stack of support structures could fall over.

It is an object of the invention to reduce the above mentioned disadvantages.

This object is achieved with a support structure according to the preamble, which is characterized by two protrusions, each arranged on a leg of the base frame, near and at a distance of the base part, and extending parallel to the length of the base part and outwardly relative to the U-shaped base frame.

The two protrusions provide a stop for a second support structure which is positioned next to a first support structure. As the distance between the legs of the U-shaped base frame increases with increasing distance to the base part of the U-shaped base frame, the two support structures can be slid partially into each other until the second support structure is stopped by the protrusions.

As a result, the support structures can easily be positioned in a row and alignment of the support structures is easily achieved as the support structures are partially slid into each other. This also results in additional structural connection between adjacent support structure and reduces the chance that a support structure is pushed out of a row or that a support structures of a row falls over.

A preferred embodiment of the support structure further comprises two protrusions, each arranged on a leg of the top frame, near and at a distance of the free ends of the legs, and extending parallel to the length of the base part and inwardly relative to the U-shaped top frame.

The protrusions at the top frame provide a further stop when a second support structure is positioned next to a support structure. These protrusions also ensure that when the second support structure is tiled during positioning, the second support structure is still stopped by either the protrusions on the base frame or the protrusions on the top frame.

A further preferred embodiment of the support structure according to the invention further comprises a centering plate arranged on the top frame, wherein the outer dimensions of the centering plate correspond with the inner dimensions of the U-shaped base frame.

The centering plate facilitates aligning a support structure when it is positioned on top of another support structure. Because the dimensions of the centering plate correspond with the inner dimensions of the U-shaped base frame a misalignment could not occur. The centering plate also ensures that the support structure stacked onto another support structure could not be shifted and fall off.

Preferably, the centering plate is tapering in height direction of the support structure. The tapering of the centering plate allows for small misalignments to be corrected automatically when a support structure is lowered onto a support structure.

Yet another preferred embodiment of the support structure according to the invention comprises a U-shaped bracket arranged on the base part of the top frame, wherein the legs of the U-shape extend in upward direction to receive the base part of the bottom frame of a stacked support structure.

Preferably, the U-shaped bracket is a profile with a U-shaped cross-section extending over the length of the base part of the top frame.

The U-shaped bracket prevents the support structure, when stacked on top of another support structure to be slid off when pushed in the direction of the legs of the base frame. Especially, when cargo is positioned afterwards on top of the lower support structure, the top support structure could be contacted and be pushed off. With the U-shaped bracket such situations are prevented.

In yet another embodiment, the profile with U-shaped cross-section also extends along the legs of the top frame. This further prevents the chance that a support structure is pushed off sideways from another support structure.

These and other features of the invention will be elucidated in conjunction with the accompanying drawings.
Figure 1 shows a perspective view of a number of support structures according to the invention in a row and stacked on top of each other.
Figure 2 shows a side view of the number of support structures according to figure 1.
Figure 3 shows a top view of the number of support structures according to figure 1.
Figure 4 shows a perspective view of the support structures of figure 1 in nested position.
Figures 5A - 5D show two dimensional views of a single support structure according to the invention.

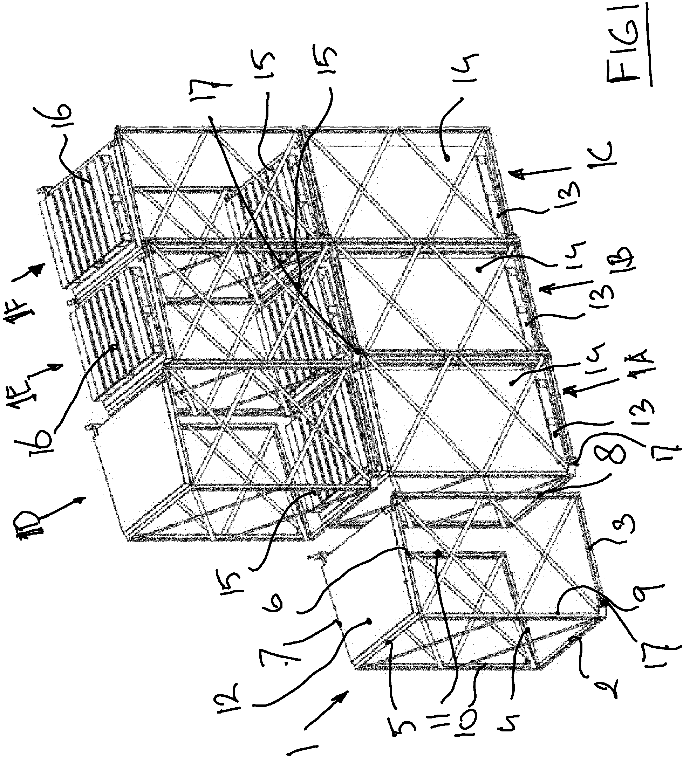

Figure 1 shows a perspective view of a support structure 1. The support structure 1 has a U-shaped base frame out of a base part 2 and two legs 3, 4, a U-shaped top frame out of a base part 5 and two legs 6, 7 and uprights 8, 9, 10, 11.

The uprights 8, 11 are arranged at the free ends of the legs, while the uprights 9, 10 are arranged at a distance of the corners between the base part 2 and legs 3, 4.

A centering plate 12 is arranged on the top frame 5, 6, 7.

Next to the support structure 1, identical support structures 1A, 1B and 1C provide a first row and the identical support structures 1D, 1E and 1F provide a second row stacked on top of the first row. The support structure 1D is shown somewhat elevated and spaced apart for more clarity.

Pallets 13 with cargo 14 are stored within the first row of support structures 1A, 1B, 1C, while empty pallets 15 are positioned on top of the first row 1A - 1C, as well as empty pallets 16 are positioned on top of the support structures 1E and 1F of the second row.

Each base frame 2, 3, 4 of each support structure 1 is provided with protrusions 17 near, but at a distance from the corner between the base part 2 and the respective leg 3, 4.

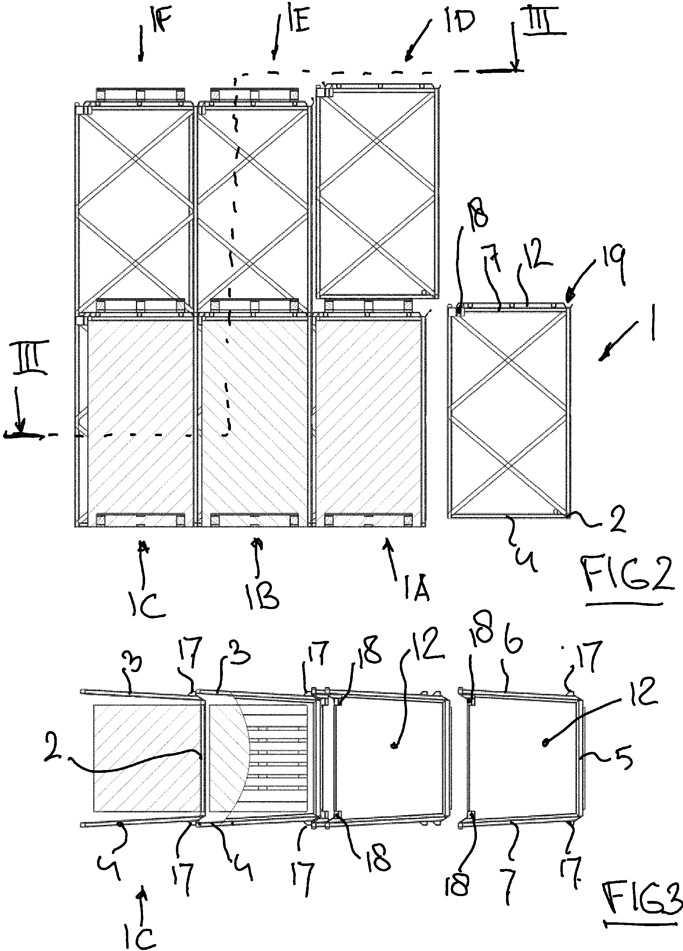

Figure 2 shows a side view of figure 1. The support structure 1 has at the top frame 5, 6, 7 second protrusions 18 near and at a distance of the free ends of the legs 6,7. Furthermore, a U-shaped bracket 19 is provided at the base part 5. This U-shaped bracket 19 receives the base part 2 of the bottom frame 2, 3, 4 of a stacked support structure 1D, 1E, 1F.

As shown in figure 3, which is a partial cross-sectional top view along the line III-III in figure 2, the protrusions 17 and 18 allow for the legs 3, 4 and 6, 7 to partially envelope the base part 2, 5 of the adjacent support structure 1B, 1C, 1E, 1F to provide additional structural stability.

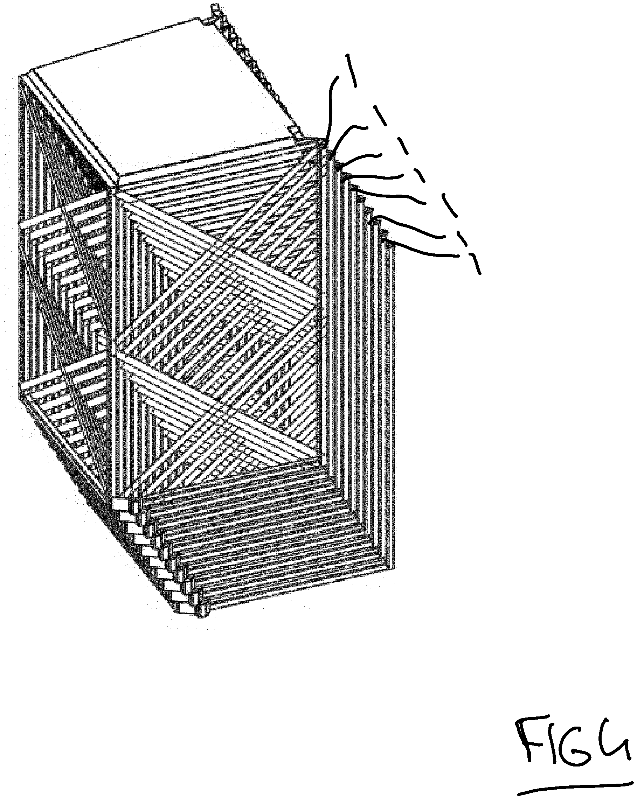

Figure 4 shows a perspective view of the support structures 1 in nested position. Due to the somewhat widening of the legs 3, 4 and 6, 7, in combination with the uprights 8, 11 being arranged at the free ends of the legs, while the uprights 9, 10 being arranged at a distance of the corners between the base part 2 and legs 3, 4, the support structures 1 can be nested as shown.

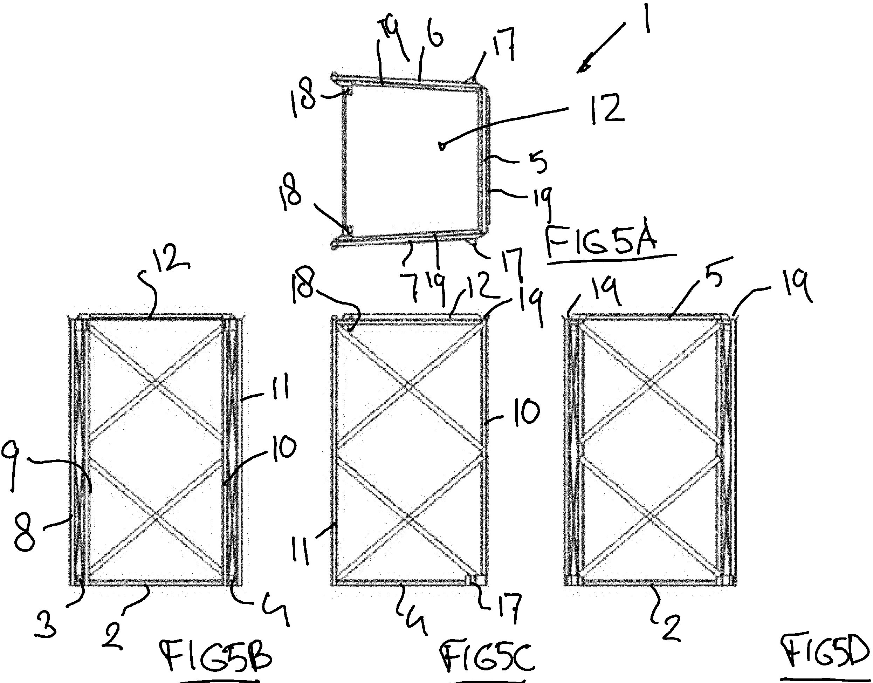

Figure 5A shows a top view of a support structure 1, while figures 5B - 5D show different side views.

As clear from figure 5C, the protrusions 17 are arranged at the bottom frame 2, 3, 4, while the protrusions 18 are arranged at the top frame 5, 6, 7.

Furthermore, the U-shaped bracket 19 to hold a stacked support structure 1 in position, runs along all three sides of the U-shaped top frame 5, 6, 7.

Also visible from figures 5B - 5D is that the centering plate 12 is tapering to the top to facilitate positioning a support structure 1 on top of the other.

## Claims

1. Support structure, which comprises:
- a U-shaped base frame comprising two legs connected by a base part;
- a U-shaped top frame comprising two legs connected by a base part;
- at least two first uprights arranged between the free ends of the U-shaped base frame and the free ends of the U-shaped top frame,
- at least two second uprights arranged to the base part of the U-shaped base frame extending vertically to the base part of the U-shaped top frame,
wherein the distance between the legs of the U-shaped base frame increases with increasing distance to the base part of the U-shaped base frame,
wherein
the at least two second uprights are arranged at a distance of the corners that connect the legs to the base part of the U-shaped base frame and the distance between the at least two first uprights is larger than the maximal distance occupied by the at least two second uprights
**characterized by**
two protrusions, each arranged on a leg of the base frame, near and at a distance of the base part, and extending parallel to the length of the base part and outwardly relative to the U-shaped base frame.

2. Support structure according to claim 1, further comprising two protrusions, each arranged on a leg of the top frame, near and at a distance of the free ends of the legs, and extending parallel to the length of the base part and inwardly relative to the U-shaped top frame.

3. Support structure according to claim 1 or 2, further comprising a centering plate arranged on the top frame, wherein the outer dimensions of the centering plate correspond with the inner dimensions of the U-shaped base frame.

4. Support structure according to claim 3, wherein the centering plate is tapering in height direction of the support structure.

5. Support structure according to any of the preceding claims, further comprising a U-shaped bracket arranged on the base part of the top frame, wherein the legs of the U-shape extend in upward direction to receive the base part of the bottom frame of a stacked support structure.

6. Support structure according to claim 5, wherein the U-shaped bracket is a profile with a U-shaped cross-section extending over the length of the base part of the top frame.

7. Support structure according to claim 6, wherein the profile with U-shaped cross-section also extends along the legs of the top frame.
